# EUROPEAN PATENT SPECIFICATION

(11) **EP 3 428 006 B1**
(45) Date of publication and mention of the grant of the patent: **22.01.2020**
(21) Application number: 18181835.2
(22) Date of filing: 05.07.2018
(51) Int. Cl.: B60N 2/28, B60N 2/90

(54) **A CHILD VEHICLE SEAT AS WELL AS AN INLAY FOR SUCH A CHILD VEHICLE SEAT**
EIN KINDERFAHRZEUGSITZ SOWIE EINE EINLAGE FÜR SOLCH EINEN KINDERFAHRZEUGSITZ
SIÈGE DE VÉHICULE POUR ENFANT AINSI QU'UNE INCRUSTATION POUR UN TEL SIÈGE DE VÉHICULE POUR ENFANT

(30) Priority: 11.07.2017 NL 2019227
(43) Date of publication of application: 16.01.2019
(73) Proprietor: Maxi Miliaan B.V., 5704 RD Helmond (NL)
(72) Inventor: Olfers, Dennis, 5595 AV Leende (NL); Lin, Hsin-Geng, Tai Pao City, Chiayi County (TW)
(74) Representative: Veldman-Dijkers, Cornelia G. C.

(56) References cited:
- EP-A2- 1 839 936
- DE-A1- 2 128 927
- US-A- 4 205 877
- US-A- 5 746 478

## Description

### FIELD OF THE INVENTION

The invention relates to a child vehicle seat comprising at least a base, a seat, a recline mechanism for moving the seat with respect to the base from at least a first position to a second position and vice versa, and a recline blocking mechanism for at least preventing displacement of the seat from the second position to the first position when a weight higher than a predetermined weight is exerted on the seat.

The invention also relates to an inlay for such a child vehicle seat.

### BACKGROUND OF THE INVENTION

By a child vehicle seat of EP1839936B1, the child is being held in the seat using a three point safety belt of the vehicle.

When bringing the child safety seat between the various positions, a problem arises when seat is displaced from the reclined position to the upright position of the child safety seat. When the three point safety belt of the vehicle is secured around the child as the child vehicle seat is placed in a reclined position, a greater length of seat belt of the vehicle has to be used than if the child safety seat is placed in an upright position. The retractor arrangement of the three point safety belt is not capable of reducing the belt length when moving the child vehicle seat from the reclined position to an upright position. This shifting of positions thereby results in a loose fastening of the belt around the child. This loose arrangement of the belt is not satisfactory when regarding the safety requirements of a child safety seat. If the adult does not retention or tighten up the three point safety belt, the child has a higher risk of injury in case of a sudden retardation of the vehicle.

By a child vehicle seat is known from EP1839936B1 movement from a reclined position to an upright position is prevented when a predetermined weight, like the weight of a child to use the child vehicle seat is exerted on the seat. However movement from the upright position to the reclined position is still possible.

Another disadvantage of this child vehicle seat is not suitable for younger or smaller children who can not yet be held in the seat by the three point safety belt of the vehicle but should be maintained in a child vehicle seat by an integrated harness in the child vehicle.

EP1839936 discloses a child seat with a base and a seat which is reclinable with respect to the base wherein two positions are possible: An upright position and a reclined position. A recline mechanism prevents movement from the reclined position to the upright position if a child is seated on the seat.

### SUMMARY OF THE INVENTION

At least one of the objects of the invention is to provide a child vehicle seat being also suitable for younger children, whereby reclining is also possible when the child is being maintained in the child vehicle seat by an integrated harness in the child vehicle seat.

Another object of the invention is to provide a child vehicle seat whereby movement from the reclined position to an upright position as well as vice versa is prevented when a predetermined weight, like the weight of a child to use the child vehicle seat is exerted on the seat.

One object is accomplished with the child vehicle seat according to the invention in that the child vehicle seat also comprises a harness for holding a child and a deactivating mechanism for deactivating the recline blocking mechanism, which deactivating mechanism can be used when the harness is being used.

In case that the child vehicle seat is being used for relatively large children with a weight for example between 15-26 kilogram, the child sitting in the seat is being held in the seat by means of the three point safety belt of the vehicle, a so called non-integral installation. The child vehicle seat can also be connected to the vehicle by means of the three point safety belt or a so called ISOFiX connectors together with an anti-rotation device (top-tether strap or support-leg). The recline blocking mechanism prevents at least displacement of the seat from the second position to the first position when a weight higher than a predetermined weight is exerted on the seat. Preferably, the recline blocking mechanism prevents displacement of the seat from the second position to the first position as well as from the first position to the second position when a weight higher than a predetermined weight is exerted on the seat.

In this manner the belts of the three point safety belt of the vehicle will not loosening around the child when the seat is being moved from the second to the first position and will also not be tightened around the child when the seat is being moved from the first to the second position.

When no child is sitting in the child vehicle seat the weight exerted on the seat will be lower than the predetermined weight so that the recline mechanism can be operated. In use, this means that before the child sits down in the child vehicle seat, the parent has to decide in which position the seat of the child vehicle seat should be.

In case that the child vehicle seat is being used for small children with a weight for example 9-18 kilogram, the child is being held in the seat by means of an integrated harness in the child vehicle seat, the so called integral installation. The child vehicle seat itself is being held in the vehicle by the three point safety belt of the vehicle or by means of so called ISOFiX system together with an anti-rotation device (top-tether strap or support-leg).

Since the child is not being held in the child vehicle seat by the three point safety belt of the vehicle but by the harness, there is no risk that the belts around the child will be loosening or tightened when the child vehicle seat is being moved from a first, for example upright position to a second, for example reclined position. The deactivating mechanism can now be used to deactivate the recline blocking mechanism so that the recline mechanism can be operated both with and without a child sitting in the child vehicle seat.

An embodiment of the child vehicle seat according to the invention is characterized in that the child vehicle seat comprises a removable inlay for reducing the size of the seat, wherein the inlay comprises the deactivating mechanism for deactivating the recline blocking mechanism.

The inlay will be used for the relatively small children with a weight for example between 9-18 kilogram. By providing the inlay with the deactivating mechanism, the recline blocking mechanism will be automatically be deactivated when installing the inlay in the seat. Another advantage is that the recline blocking mechanism van not be deactivated when there is no inlay in the seat The harness extend along or through the inlay.

Another embodiment of the child vehicle seat according to the invention is characterized in that the recline mechanism comprises a handle being pivotable with respect to the seat from locking positions on the base defining the at least first and second positions of the seat, to an unlocked position wherein the seat is movable with respect to the base from at least a first position to a second position and vice versa, whilst the recline blocking mechanism comprises means to block pivoting of the handle, which means is movable from an unblocked position wherein the handle is pivotable with respect to the seat to a blocked position wherein pivoting of the handle is prevented.

With such a handle the displacement of the seat between a first and a second position and if desired other positions is relatively easy. By preventing the handle to pivot, blocking of the recline mechanism is also relatively easy.

Another embodiment of the child vehicle seat according to the invention is characterized in that the means to block pivoting of the handle comprises an operating arm being pivotable against spring force from the unblocked position to the blocked position wherein the operating arm cooperates with the handle and prevent pivoting of the handle.

When no force is exerted on the operating arm, spring force will keep the operating arm in the unblocked position wherein the handle can be operated. In case that the operating arm is being pivoted against spring force from the unblocked position to the blocked position, the handle can no longer be pivoted and the seat can no longer be displaced from its position to the one of the other positions.

Another embodiment of the child vehicle seat according to the invention is characterized in that the means to block pivoting of the handle comprises an extension provided on the handle, which extension is located in a passage in the operating arm in the blocked position thereof.

When the extension of the handle is located in the passage of the operating arm, pivoting of the handle is no longer possible and the seat can no longer be displaced from its position to the one of the other positions.

Another embodiment of the child vehicle seat according to the invention is characterized in that the recline blocking mechanism comprises a pivotable plate provided in a seat portion of the seat, which plate cooperates with the operating arm, wherein the pivotable plate is in a rest position when the operating arm is in the unblocked position, whilst the plate is pivotable under a weight higher than the predermined weight on the seat if no deactivating mechanism is present in the seat to pivot the operating arm to the blocked position wherein the operating arm cooperates with the handle and blocks pivoting of the handle.

Such a plate can simply be provided in the seat portion of the seat and will not provide discomfort for the child sitting on the seat portion.

Another embodiment of the child vehicle seat according to the invention is characterized in that the means to block pivoting of the handle is maintained in the unblocked position by the deactivating mechanism of the inlay.

By holding the means to block pivoting of the handle in the unblocked position by the deactivating mechanism of the inlay, the handle can be moved between the several positions independent whether a child is sitting in the seat or not.

Another embodiment of the child vehicle seat according to the invention is characterized in that the deactivating mechanism of the inlay comprises a strip being in abutment with the operating arm when the inlay is positioned in the seat, whereby the operating arm is maintained in the unblocked position.

Such a strip simply prevents pivoting of the operating arm.

Another embodiment of the child vehicle seat according to the invention is characterized in that the recline mechanism is movable to the unlocked position against spring force.

In this manner, the recline mechanism will normally be in its locked position and can only be moved to the unlocked position when the spring force has been overcome.

Another embodiment of the child vehicle seat according to the invention is characterized in that the harness comprises at least a crotch belt, whilst the seat comprises a compartment for storing the crotch belt.

### BRIEF DESCRIPTION OF THE DRAWINGS

The child vehicle seat according to the invention will further be explained with reference to the drawings, wherein,
figure 1 is a perspective view of a child vehicle seat according to the invention with an inlay,
figure 2 is a perspective view of the child vehicle seat as shown in figure without an inlay,
figure 3 is a perspective view of the child vehicle seat as shown in figure 2 without covers,
figure 4 is a perspective view of a part of the child vehicle seat as shown in figure 2,
figure 5A and 5B are a perspective view of the inlay of the child vehicle seat as shown in figure 1 and a a perspective view of a detailed part of the inlay,
figure 6 is a perspective view of a part of the child vehicle seat as shown in figure 1,
figures 7A-7D are cross sections of the child seat as shown in figure 2 showing respectively the seat in a first locked position and a first unlocked position without a child and a first locked position with a child sitting in the seat and a a perspective view of a detailed part of the recline blocking mechanism,
figures 8A-8C are cross sections of the child seat as shown in figure 2 showing respectively the seat in a third locked position and a third unlocked position without a child and a third locked position with a child sitting in the seat,
figures 9A-9B are cross sections of the child seat as shown in figure 1 showing respectively the seat in a first locked position without and with a child sitting in the seat, with a first embodiment of the deactivating mechanism according to the invention,
figures 10A-10B are cross sections of the child seat as shown in figure 1 showing respectively the seat in a first unlocked position without and with a child sitting in the seat,
figures 11A and 11B are perspective views of a second embodiment of a deactivating mechanism according to the invention, in a rest position and deactivating position respectively
figure 12 is a perspective view of a third embodiment of a deactivating mechanism according to the invention.

In the drawings, like reference numerals refer to like elements.

### DESCRIPTION OF PREFERRED EMBODIMENTS

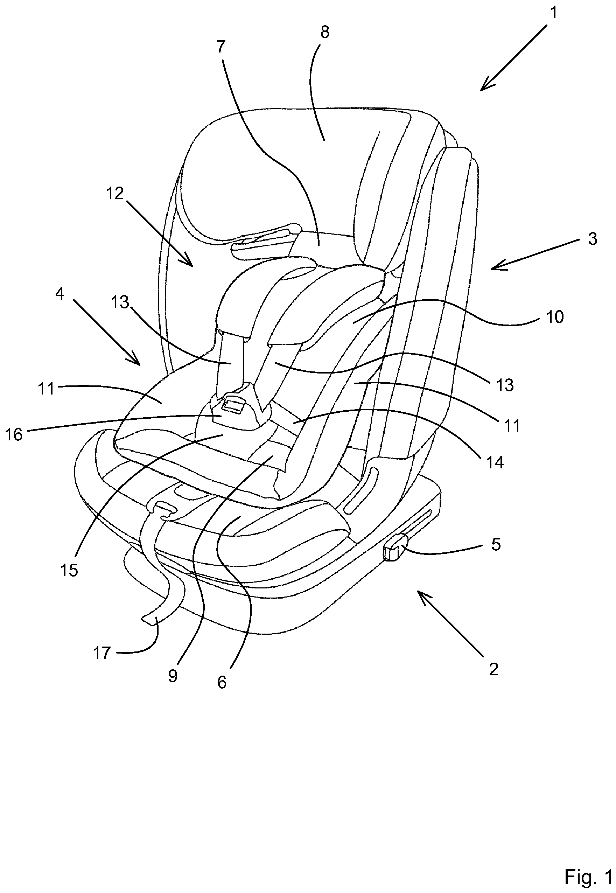

The figures 1-6 show different views of a child vehicle seat 1 according to the invention. The child vehicle seat 1 comprises a base 2, a seat 3 and a removable inlay 4 for reducing the size of the seat 3.

The base 2 can be provided on both sides with ISOFIX-connectors being slidable in and out the base 2 by means of knobs 5. By means of the ISOFIX-connectors the child vehicle seat 1 can be connected in a manner known per se to a vehicle.

The seat 3 is provided with a seat portion 6, a backrest portion 7 and a movable headrest portion 8.

The inlay 4 is provided with an inlay seat portion 9, an inlay backrest portion 10 and side portions 11 extending between the inlay seat portion 9 and inlay backrest portion 10. As can be seen in figure 1, the inlay seat portion 9 rests on the seat portion 6 whilst the inlay backrest portion 10 rests against the backrest portion 7 of the seat 3. Due to the side portions 11 of the inlay 4 the width of the seat is reduced. When using the inlay 4, a harness 12 is connected to the seat 3 and the inlay 4, which harness 12 comprises two shoulder belts 13, two side belts 14 and one crotch belt 15 being detachably connected to each other by means of a buckle 16. The belts of the harness 12 can be tensioned by means of strap 17.

The child vehicle seat 1 described so far is known per se and will not be described in more detail.

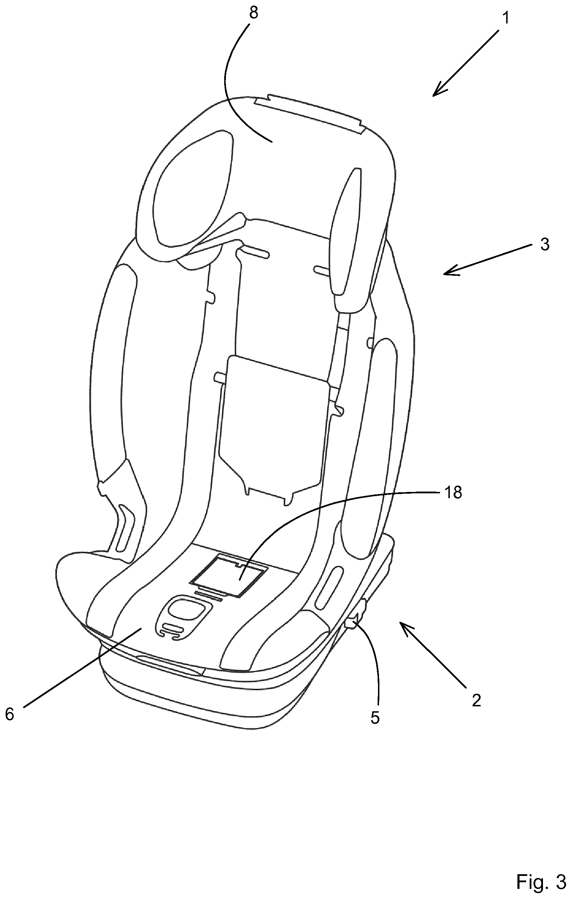

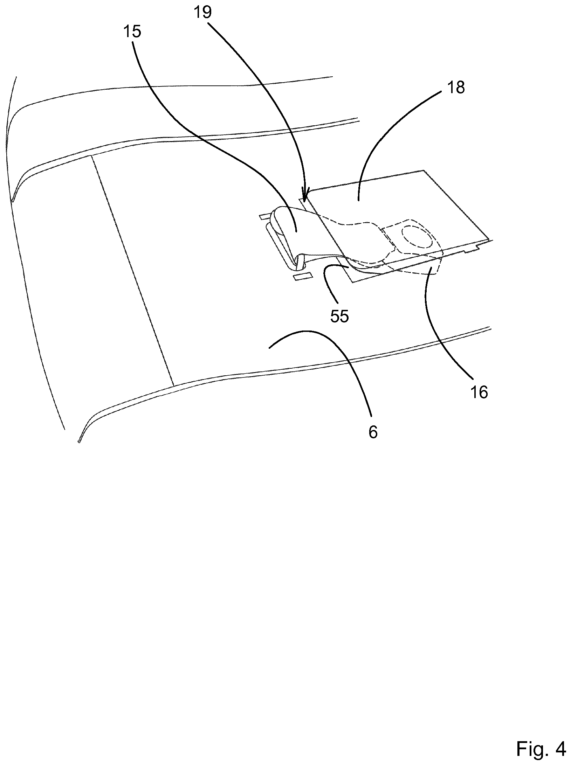

As can be seen in figures 3 and 4 the child vehicle seat 1 comprises a pivotable plate 18 covering a compartment 19 in the seat portion 6. The crotch belt 15 and the buckle 16 can be stored in the compartment 19. This will be done when the child vehicle seat will be used as a non-integral seat for children with a weight for example 15-36 kilogram, whereby the child vehicle seat 1 is being used without inlay 4 and without the two shoulder belts 13 and the two side belts 14.

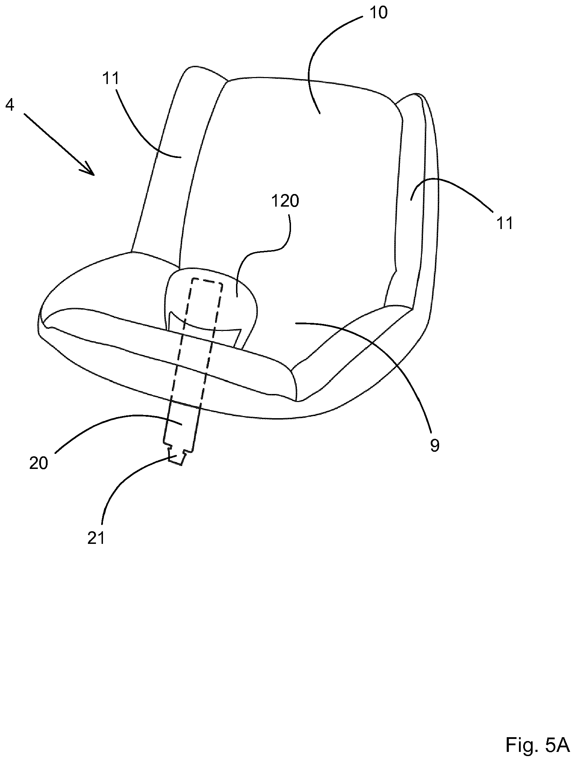

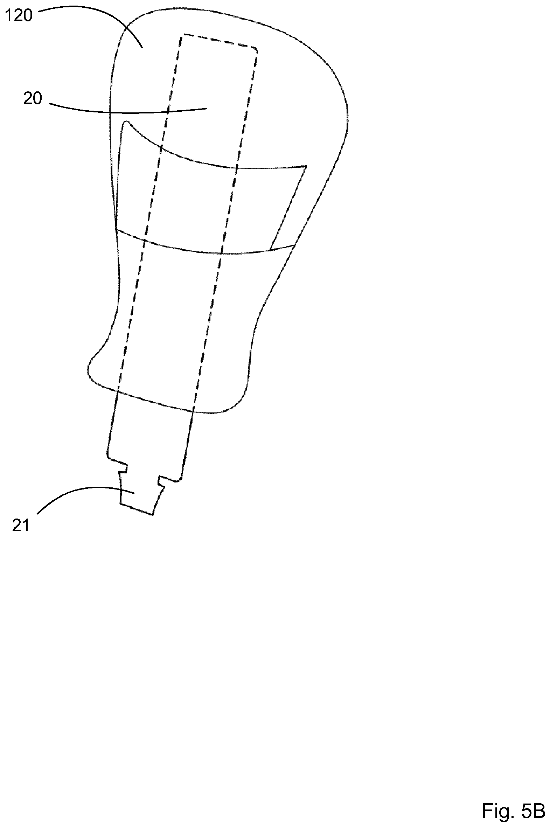

Figure 5A shows the inlay 4 according to the invention. The inlay 4 differs from the inlays known so far in that the inlay 4 is provided with a deactivating mechanism comprising a strip 20 located partly inside the inlay seat portion 9 and extending partly below the inlay seat portion 9. At an end remote of the inlay seat portion 9, the strip 20 is provided with an end part 21. As can be best seen in figure 5B the strip 20 in located inside a crotch part 120 of the inlay 4.

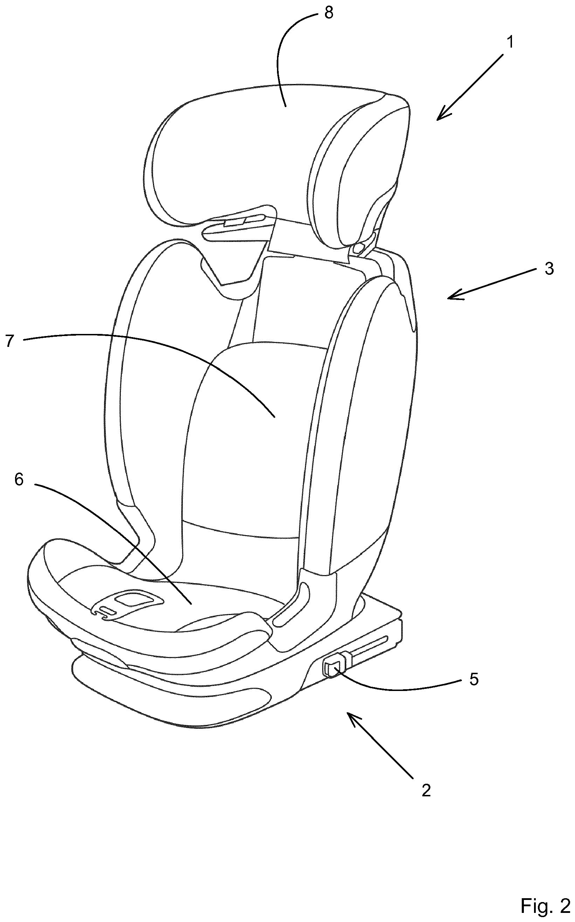

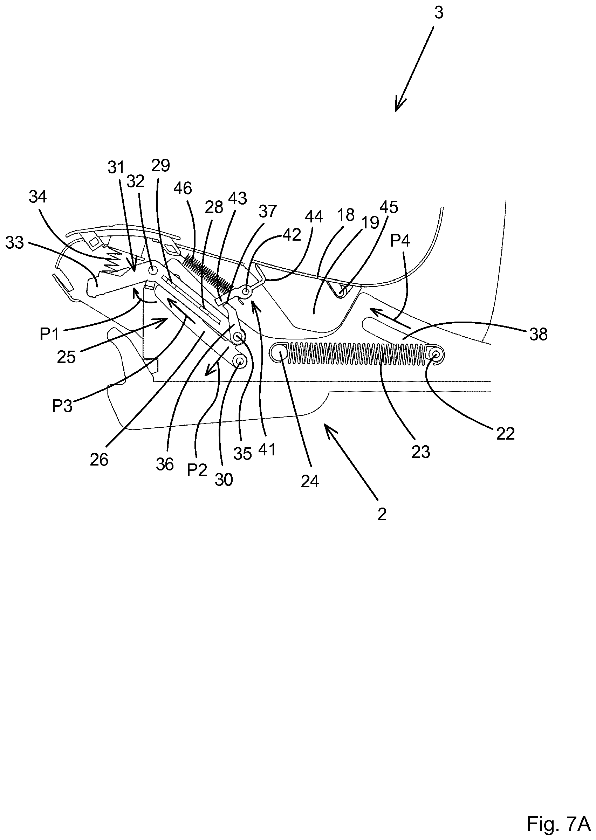

Figures 7A-7C are cross sections of the child seat as shown in figure 2 showing respectively the seat 3 in a first locked position and a first unlocked position without a child and a first locked position with a child sitting in the seat 3.

The base 2 is provided with a first curved slot 38 wherein a pen 22 connected to the seat 3 is slidable movable. A spring 23 is connected to the pen 22 of the seat 3. At an end remote of pen 22 the spring 23 is connected to an extension 24 on the base 2.

The base 2 is provided with a second slot 25 having a main longitudinal slot 26 and three position slots 27, 28, 29 extending perpendicular to the main longitudinal slot 26. In said main longitudinal slot 26 a pen 30 connected to the seat 3 is slidable movable. The seat 3 is provided with a lever-shaped handle 31 being pivotable about an axis 32. Between a first end 33 of the handle 31 and a front side of the seat 3 a spring 34 is located. At a second end remote of the first end the handle 31 is provided with a pen 35 being slidable movable in second slot 25. In the position as shown in figure 7A the pen 35 is located in the first position slot 27, whereby the seat 3 is located in a first upright position. In the first position, the pens 22 and 30 are located near lower ends of the slots 38, 26.

The seat 3 comprises a recline mechanism comprising amongst others the slots 25, 38 in the base 2, the springs 23 and 34, the pens 22, 30, 35 of the seat 3 and the handle 31.

The recline mechanism works as follows.

To move the seat 3 from a first position to a second or third position, a user will move the first end 33 of the handle 31 against spring force of spring 34 so that the handle 31 will be pivoted about axis 32 in the direction as indicated by arrow Pi. By doing so, the pen 35 will be moved in the direction as indicated by arrow P2 from the first position slot 27 into the main longitudinal slot 26. As soon as the pen 35 is located in the main longitudinal slot 26, the pen 35 together with pen 30 can be moved under spring force of spring 23 in the main longitudinal slot 26 in the direction as indicated by arrow P3 until the pen 35 is located near the second or third position slot 28, 29. In the second position the seat will be in an intermediate position whilst in the third position the seat will be in a reclined position. In the same time the pen 22 of the seat 3 is moved under spring force of spring 23 in a direction indicated by arrow P4.

By releasing the handle 31, the handle 31 will be moved under the spring force of springs 23, 34 to a position wherein the pen 35 will be moved into the nearest position slot 27, 28, 29, being the first slot when moving the pen 35 in the direction indicated by arrow P3.

At the second end the handle 31 is also provided with an extension 36 directed upwards and towards the front side of the seat 3. At an end remote of the pen 35 the extension 36 is provided with a locking element 37.

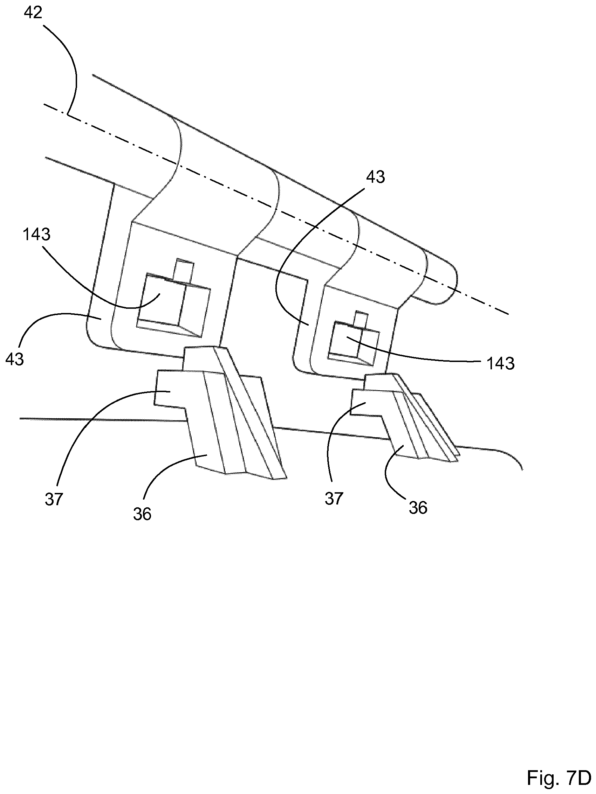

The seat 3 is furthermore provided with a lever-shaped operating arm 41 being pivotable about an axis 42. The operating arm 41 comprises with a first part 43 directed towards the handle 31 and a second part 44 directed towards the plate 18. As can be seen in figures 7A-7C the plate 18 is pivotable about axis 45. The first part 43 is provided with a passage 143 as can be seen in figure 7D.

The second part 44 is L-shaped. Its end 47 is in abutment with a lower side of the plate 18.

A spring 46 is connected to the operating arm 41 biasing the operating arm 41 into an unblocked position as shown in figure 7A, in which unblocked position the locking element 37 of the extension 36 of the handle 31 is not located inside the passage of the operating arm 41.

The seat 3 comprises a recline blocking mechanism comprising amongst others the extension 36 on the handle 31, the operating arm 41, the spring 46 and the plate 18.

The figures 7A-7C show the child vehicle seat 1 without inlay 4, whereby the child vehicle seat will be used for relative large children with a weight for example between 15-36 kilogram. With such a seat the child will be held inside the seat 3 by means of the three point safety belt of the vehicle.

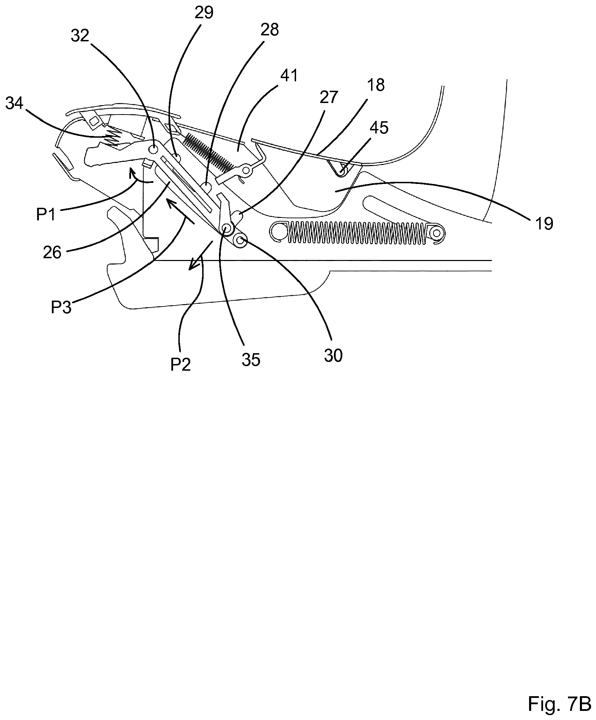

In the figures 7A and 7B situations are shown whereby no child is present in the seat 3. In these situations, the recline mechanism can be operated as described above.

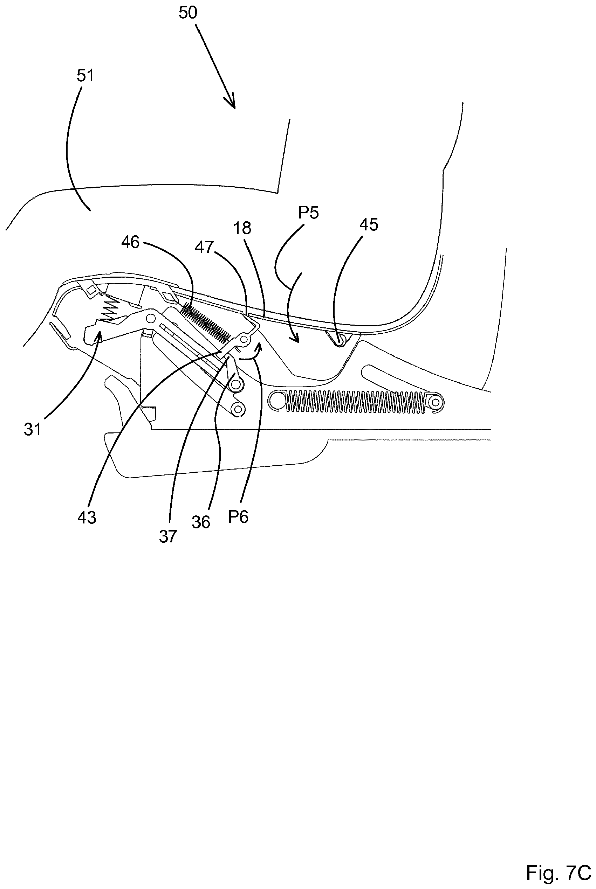

As can be seen in figure 7C, a child 50 is now sitting in the seat 3, whereby his upper legs 51 rest against the seat portion 6 of the seat 3. Since the weight of the child 50 is larger than a predetermined weight of for example one kilogram, the plate 18 will be pivoted about axis 45 in a direction indicated by arrow P5, whereby the plate 18 will exert a force onto the end 47 of the L-shaped second part 44. Due to said force, the operating arm 41 will be pivoted against spring force of spring 46 in a counter clockwise direction as indicated by arrow P6, whereby the passage in the first part 43 of the operating arm 41 will be moved over the locking element 37 of the extension 36 of the handle to the blocking position of the operating arm 41. In the blocking position of the operating arm 41, the handle 31 can no longer be moved to the position as shown in figure 7B, so that it is no longer possible to change the position of the seat 3 with respect to the base 2. In the blocking position the seat 3 can neither be moved from the first upright position to the second or third position nor from the third reclined position to the second or first position.

As soon as the child leaves the seat 3, the operating arm 41 will be pivoted under spring force of spring 46 in a clockwise direction opposite to arrow P6, whereby the passage in the first part 43 of the operating arm 41 will be moved away from the locking element 37 of the extension 36 of the handle to the unblocking position of the operating arm 41. Furthermore, the L-shaped second part 44 will force the plate 18 to pivot about axis 45 in a direction opposite to arrow P5 to the situation as shown in figure 7A.

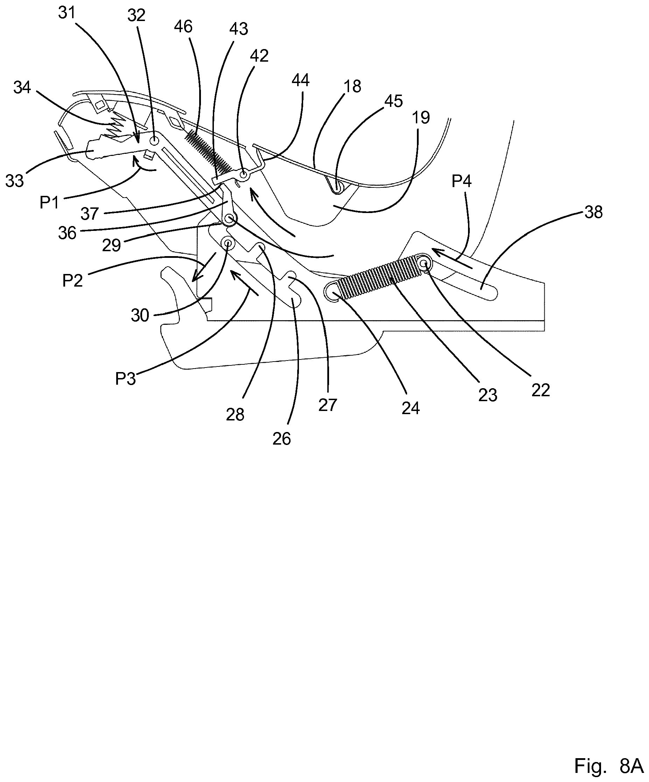

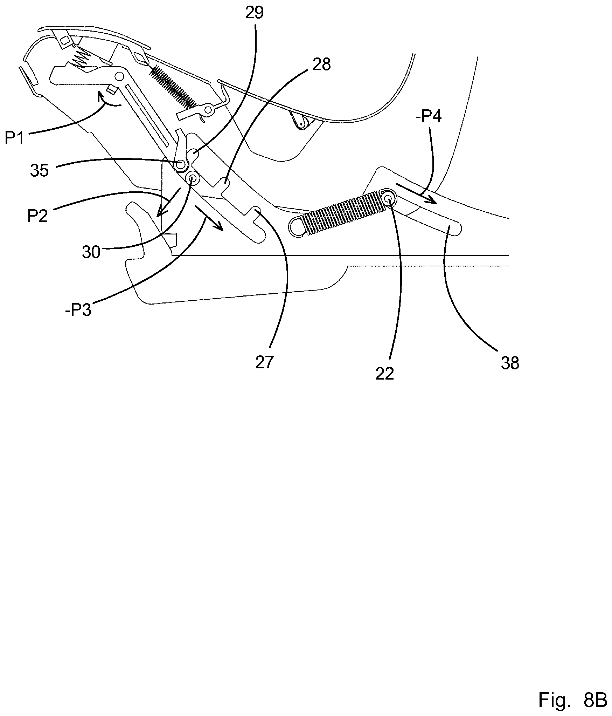

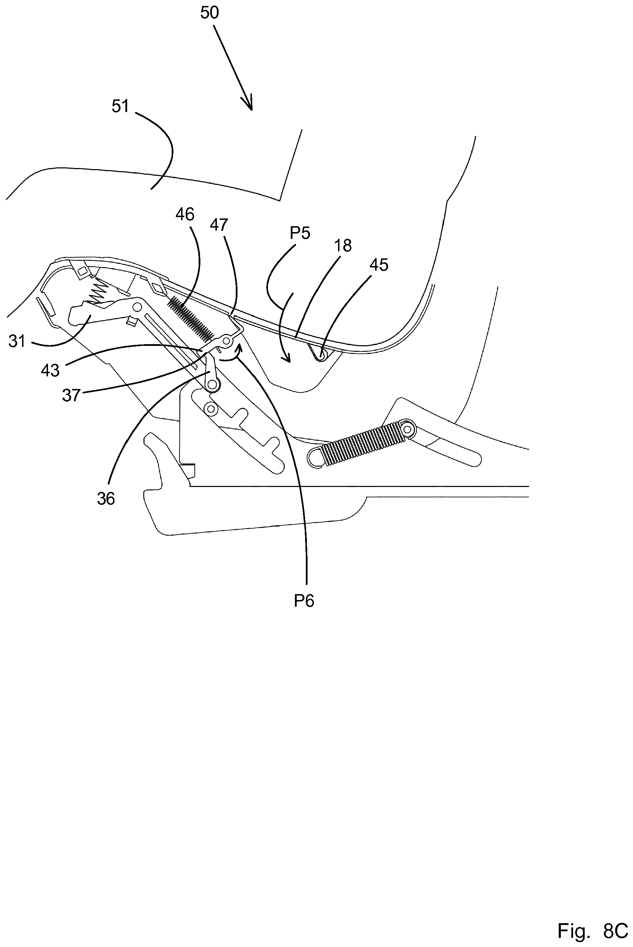

Figures 8A-8C are cross sections of the child seat as shown in figure 2 showing respectively the seat 3 in a third locked position and a third unlocked position without a child and a third locked position with a child sitting in the seat 3.

The only difference between the figures 7A-7C and the figures 8A-8C is that in the figures 7A-7C the seat is in the first upright position, whilst in the figures 8A-8C the seat 3 is in the third reclined position. In the third position, the pens 22 and 30 are located near upper ends of the slots 38, 26.

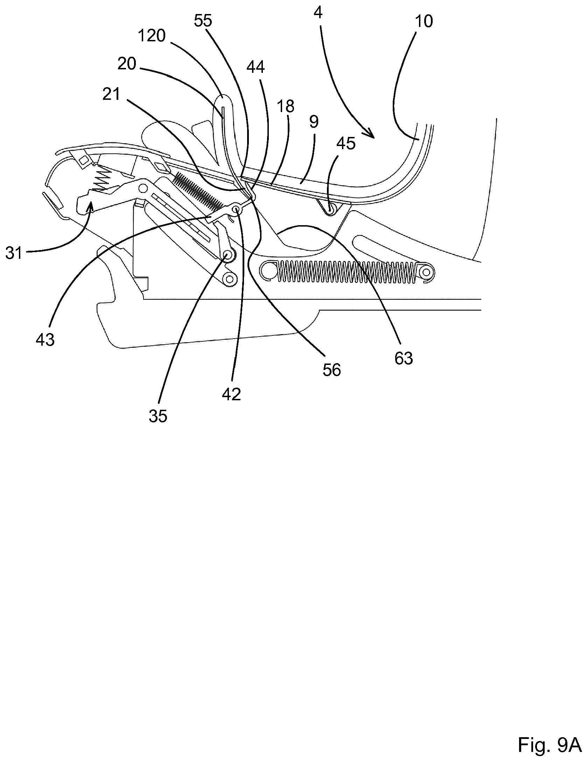

The figures 9A-9B are cross sections of the child seat as shown in figure 1 showing respectively the seat in a first locked position without and with a child sitting in the seat. The figures 9A-9B show the child vehicle seat 1 with the inlay 4, whereby the child vehicle seat will be used as an integral seat for relative small children with a weight for example between 9-18 kilogram. With such a seat the child will be held inside the inlay 4 and the seat 3 by means of the harness 12.

By positioning the inlay 4 onto the seat portion 6 of the seat 3, the end part 21 of the strip 20 will be inserted in an opening 55 in front of the plate 18 until the end part 21 abuts against the inner corner 56 of the L-shaped second part 44.

The operating arm 41 being in its unblocked position is now locked against movement towards the blocked position.

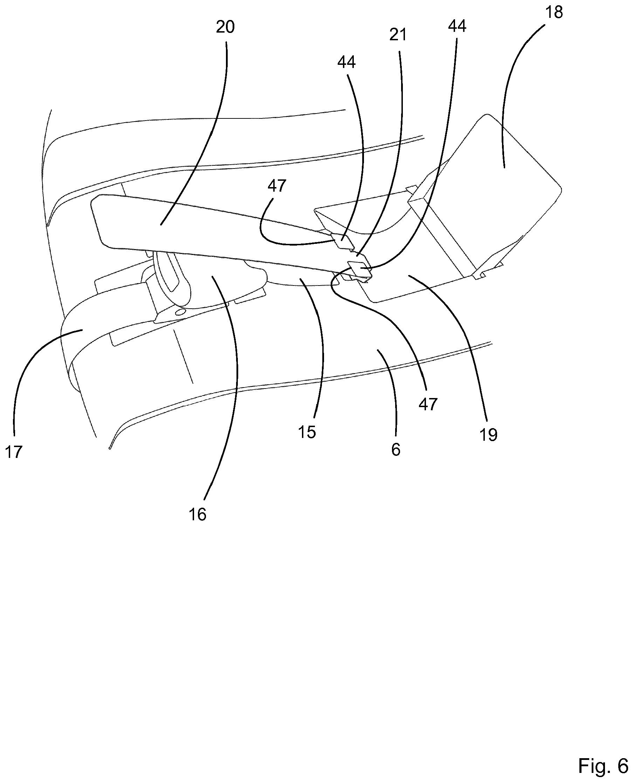

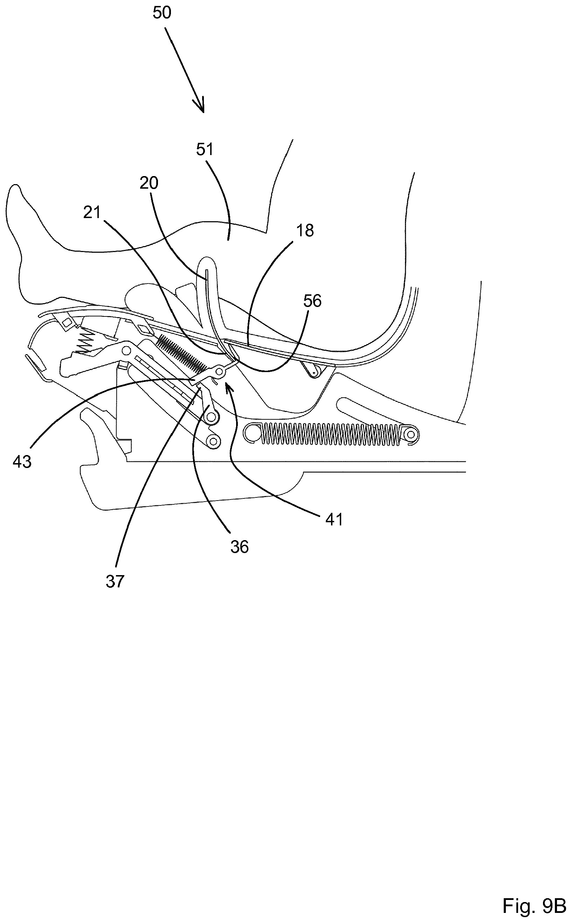

As can be seen in figure 9B, although a child 50 is sitting on the seat portion 6 of the seat 3, the plate 18 is prevented by moving in the direction as indicated by arrow P5 (see figures 6, 7C) by the end 47 of the L-shaped second part 44.

The deactivating mechanism comprising the strip 20 and the L-shaped second part 44 of the lever-shaped operating arm 41 is now activated and the recline blocking mechanism is deactivated.

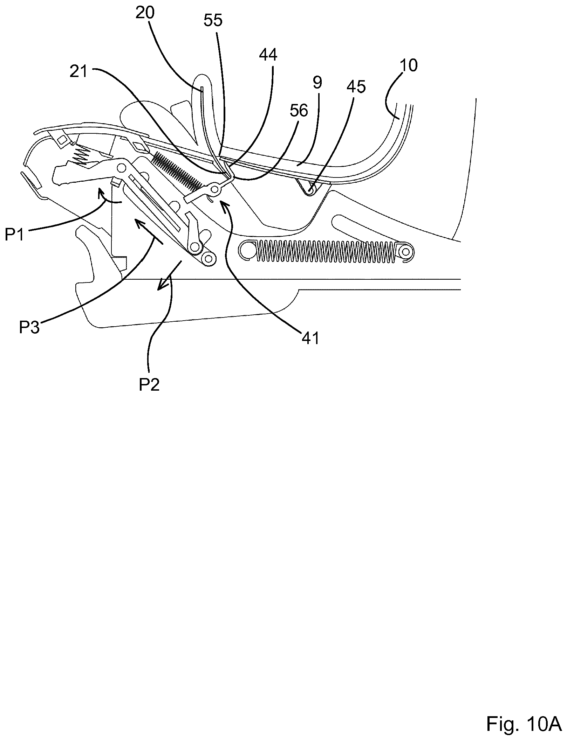

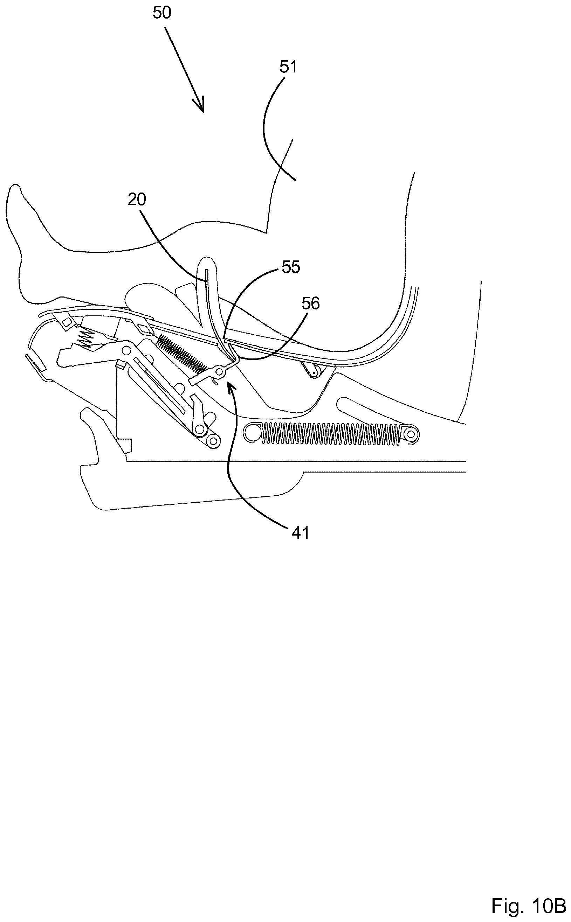

Figures 10A-10B are cross sections of the child seat as shown in figure 1 showing respectively the seat in a first unlocked position without and with a child sitting in the seat.

The only difference between the figures 9A-9B and the figures 10A-10B is that in the figures 9A-9B the recline mechanism is in its locked position in the figures 10A-10B the recline mechanism is in its unlocked position so that the seat 3 can be moved from the first to the second or third position and vice versa.

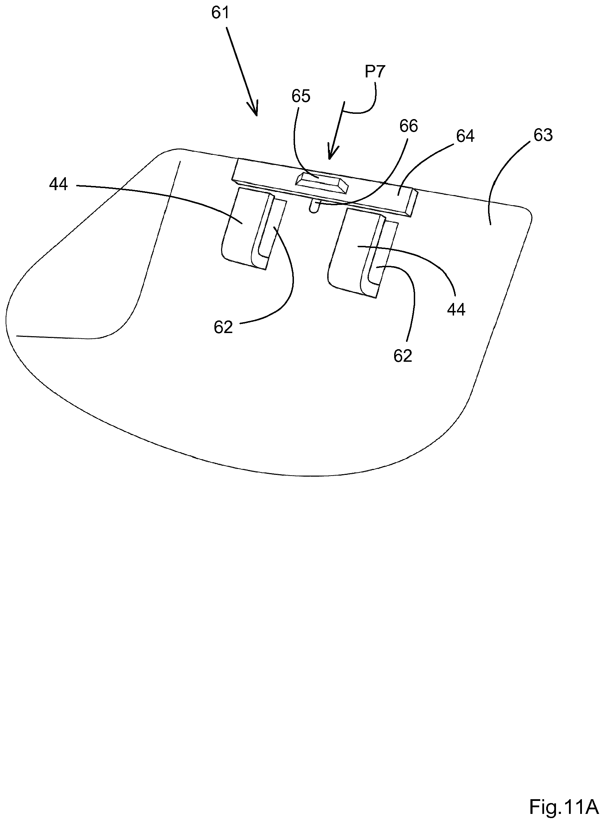

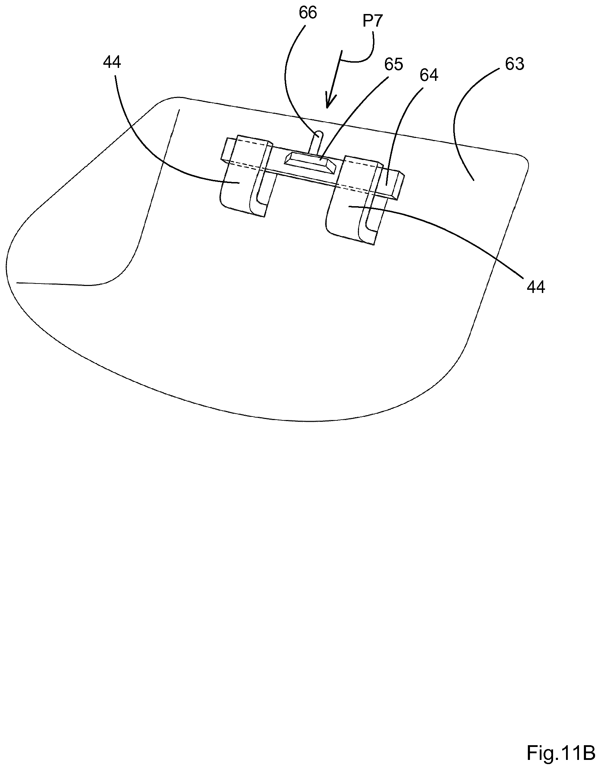

Figures 11A and 11B are perspective views of a second embodiment of a deactivating mechanism 61 according to the invention. The deactivating mechanism 61 comprises the L-shaped second parts 44 of the lever-shaped operating arm 41. The L-shaped second parts 44 extend through passages 62 in a wall 63 of the compartment 19. The deactivating mechanism 61 also comprises a strip 64 being provided with a handle 65. The handle 65 is slidable along a slot 66 in the wall 63 in and opposite a direction indicated by arrow P7 to move the strip 64 from a rest position to a deactivating position. In the rest position (figure 11A) the L-shaped second parts 44 can freely be moved through the passages 62 in the wall 63 of the compartment 19 so that the lever-shaped operating arm 41 can be pivoted. In the deactivating position (figure 11B) the L-shaped second parts 44 can no longer be moved through the passages 62 in the wall 63 of the compartment 19 thereby blocking the pivotal movement of the lever-shaped operating arm 41.

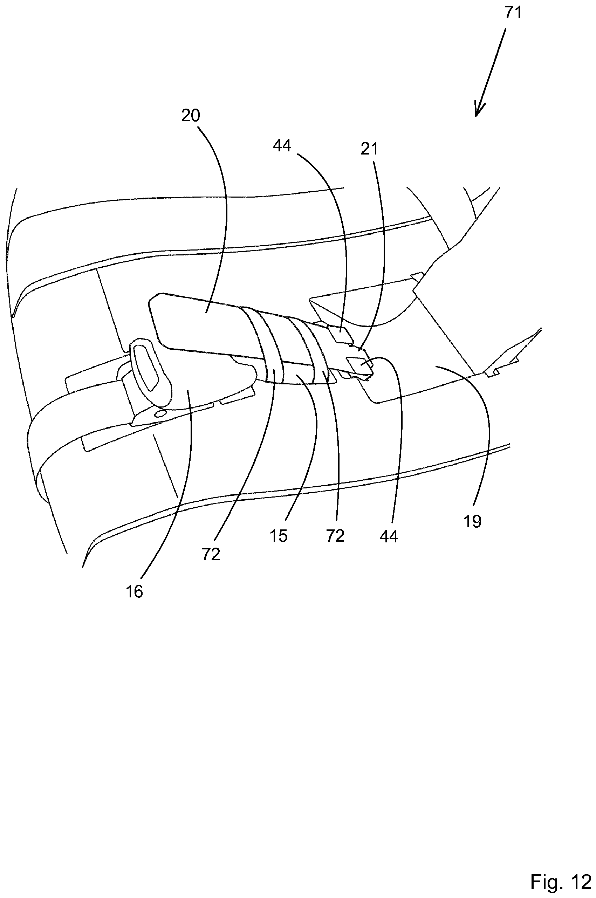

Figure 12 is a perspective view of a third embodiment of a deactivating mechanism 71 according to the invention.

By this embodiment the strip 20 is connected to the crotch belt 15 by means of straps 72. In the position as shown in figure 12 the end part 21 of the strip 20 is in engagement with the L-shaped second parts 44 of the lever-shaped operating arm 41 so that the pivotal movement of the lever-shaped operating arm 41 is blocked. The buckle 16 can be used to connect the child to the seat 3. By storing the buckle 16 in the compartment 19, the end part 21 of the strip 20 is removed out of engagement with the L-shaped second parts 44 of the lever-shaped operating arm 41 so that the lever-shaped operating arm 41 can be pivoted again.

It is also possible to block the operating arm 41 in its unlocked position by other means.

### LIST OF REFERENCE SIGNS

- 1: child vehicle seat
- 2: base
- 3: seat
- 4: inlay
- 5: knob
- 6: seat portion
- 7: backrest portion
- 8: headrest portion
- 9: inlay seat portion
- 10: inlay backrest portion
- 11: side portion
- 12: harness
- 13: shoulder belt
- 14: side belt
- 15: crotch belt
- 16: buckle
- 17: strap
- 18: plate
- 19: compartment
- 20: strip
- 21: part
- 22: pen
- 23: spring
- 24: extension
- 25: second slot
- 26: longitudinal slot
- 27: position slot
- 28: position slot
- 29: position slot
- 30: pen
- 31: lever-shaped handle
- 32: axis
- 33: first end
- 34: spring
- 35: pen
- 36: extension
- 37: locking element
- 38: slot
- 41: lever-shaped operating arm
- 42: axis
- 43: first part
- 44: second part
- 45: axis
- 46: spring
- 47: end
- 50: child
- 51: leg
- 55: opening
- 56: inner corner
- 61: deactivating mechanism
- 62: passage
- 63: wall
- 64: strip
- 65: handle
- 66: slot
- 71: deactivating mechanism
- 72: strap
- 120: crotch part
- 143: passage
- P1: arrow
- P2: arrow
- P3: arrow
- P4: arrow
- P5: arrow
- P6: arrow
- P7: arrow

## Claims

1. A child vehicle seat (i) comprising at least a base (2), a seat (3), a recline mechanism for moving the seat (3) with respect to the base (2) from at least a first position to a second position and vice versa, and a recline blocking mechanism for at least preventing displacement of the seat (3) from the second position to the first position when a weight higher than a predetermined weight is exerted on the seat (3), **characterized in that** the child vehicle seat (1) also comprises a harness (12) for holding a child (50) in the seat (3) and a deactivating mechanism for deactivating the recline blocking mechanism, which deactivating mechanism can be used when the harness is being used.

2. A child vehicle seat (1) according to claim 1, **characterized in that** the child vehicle seat (1) comprises a removable inlay (4) for reducing the size of the seat (3), which inlay 4 comprises the deactivating mechanism for deactivating the recline blocking mechanism.

3. A child vehicle seat (1) according to claim 1 or 2, **characterized in that** the recline mechanism comprises a handle (31) being pivotable with respect to the seat (3) from locking positions on the base (2) defining the at least first and second positions of the seat (3), to an unlocked position wherein the seat (3) is movable with respect to the base (2) from at least the first position to the second position and vice versa, whilst the recline blocking mechanism comprises means to block pivoting of the handle (31), which means is movable from an unblocked position wherein the handle (31) is pivotable with respect to the seat (3) to a blocked position wherein pivoting of the handle (31) is prevented.

4. A child vehicle seat (1) according to claim 3, **characterized in that** the means to block pivoting of the handle (31) comprises an operating arm (41) being pivotable against spring force from the unblocked position to the blocked position wherein the operating arm (41) cooperates with the handle (31) and prevent pivoting of the handle (31).

5. A child vehicle seat (1) according to claim 4, **characterized in that** the means to block pivoting of the handle (31) comprises an extension (36) provided on the handle (31), which extension (36) is located in a passage in the operating arm (41) in the blocked position thereof.

6. A child vehicle seat (1) according to claim 4 or 5, **characterized in that** the recline blocking mechanism comprises a pivotable plate (18) provided in a seat portion (6) of the seat (3), which plate cooperates with the operating arm (41), wherein the pivotable plate is in a rest position when the operating arm (41) is in the unblocked position, whilst the plate is pivotable under a weight higher than the predermined weight on the seat (3) if no deactivating mechanism is present in the seat (3) to pivot the operating arm (41) to the blocked position wherein the operating arm (41) cooperates with the handle (31) and blocks pivoting of the handle (31).

7. A child vehicle seat (1) according to one of the preceding claims 3-6, **characterized in that** the means to block pivoting of the handle (31) is maintained in the unblocked position by the deactivating mechanism of the inlay (4).

8. A child vehicle seat (1) according to claim 4, 5 or 6, **characterized in that** the deactivating mechanism comprises a strip (20) being in abutment with the operating arm (41), whereby the operating arm (41) is maintained in the unblocked position.

9. A child vehicle seat (1) to one of the preceding claims, **characterized in that** the recline mechanism is movable to the unlocked position against spring force.

10. A child vehicle seat (1) to one of the preceding claims, **characterized in that** the harness (12) comprises at least a crotch belt (15), whilst the seat (3) comprises a compartment for storing the crotch belt (15).

11. An inlay (4) for a child vehicle seat (1) according to one of the preceding claims, which inlay (4) is provided with a deactivating mechanism for deactivating the recline blocking mechanism of the child vehicle seat (1).

## Patentansprüche

1. Kinderfahrzeugsitz (1) mit mindestens einer Basis (2), einem Sitz (3), einer Neigevorrichtung zum Bewegen des Sitzes (3) im Verhältnis zu der Basis (2) aus mindestens einer ersten Position in eine zweite Position und umgekehrt, eine Neigungsarretiervorrichtung, um zumindest den Versatz des Sitzes (3) aus der zweiten Position in die erste Position zu unterbinden, wenn Gewicht höher als ein vorgegebenes Gewicht auf den Sitz (3) ausgeübt wird, **dadurch gekennzeichnet, dass** der Kinderfahrzeugsitz (1) ferner einen Gurt (12) für das Halten eines Kindes (50) in dem Sitz (3) und eine Deaktivierungsvorrichtung zum Deaktivieren der Neigungsarretiervorrichtung umfasst, wobei diese Deaktivierungsvorrichtung betätigtbar ist, wenn der Gurt in Benutzung ist.

2. Kinderfahrzeugsitz (1) gemäß Anspruch 1, **dadurch gekennzeichnet, dass** der Kinderfahrzeugsitz (1) einen entfernbaren Einsatz (4) zur Reduzierung der Größe des Sitzes (3) umfasst, wobei der Einsatz (4) eine Deaktivierungsvorrichtung zur Deaktivierung der Neigungs arretiervorrichtung umfasst.

3. Kinderfahrzeugsitz (1) gemäß Anspruch 1 oder 2, **dadurch gekennzeichnet, dass** die Neigungsvorrichtung einen Griff (31) umfasst, der im Verhältnis zu den Sitz (3) bewegbar ist aus Arretierungspositions auf der Basis (2), welche die mindestens erste und zweite Position des Sitzes (3) definieren in eine entriegelte Position, in welcher der Sitz (3) bewegbar ist im Verhältnis zu der Basis (2) aus der mindestens ersten Position in die zweite Position und umgekehrt, ob die Neigungsarretierungsvorrichtung Mittel zum Blockieren des Griffes (31) umfassen, welche Mittel bewegbar sind aus einer Freigabestellung, in welcher der Griff (31) bewegbar ist im Verhältnis zu dem Sitz (3) in eine Arretierstellung, in welcher Bewegung des Griffes (31) verhindert wird.

4. Kinderfahrzeugsitz (1) gemäß Anspruch 3, **dadurch gekennzeichnet, dass** die Mittel zum Verhindern der Bewegung des Griffes (31) einen Betätigungsarm (41) umfassen, welcher schwenkbar ist gegen eine Federkraft aus der Freigabestellung in die Arretierstellung, wobei der Betätigungsarm (41) in Wirkverbindung steht mit dem Griff (31) und die Bewegung des Griffes (31) verhindert.

5. Kinderfahrzeugsitz (1) gemäß Anspruch 4, **dadurch gekennzeichnet, dass** die Mittel zum Blockieren der Bewegung des Griffes (31) eine Verlängerung (36) an dem Griff (31) umfassen, wobei die Verlängerung (36) angeordnet ist in einem Weg des Betätigungsarms (41) in dessen Arretierstellung.

6. Kinderfahrzeugsitz gemäß Anspruch 4 oder 5, **dadurch gekennzeichnet, dass** die Neigungsarretiervorrichtung eine schwenkbare Platte (18) umfasst, welche in dem Sitzabschnitt (6) des Sitzes (3) angeordnet ist, wobei die Platte in Verbindung steht mit dem Betätigungsarm (41), wobei die schwenkbare Platte in einer Ruheposition ist, wenn der Betätigungsarm (41) in der Freigabestellung ist, während die Platte unter Gewicht höher als ein vorgegebenes Gewicht auf den Sitz (3) bewegbar ist, wenn keine Deaktivierungsvorrichtung vorhanden ist in dem Sitz (3), um den Betätigungsarm (41) in die Arretierstellung zu schwenken, wobei der Betätigungsarm (41) in Wirkverbindung ist mit dem Griff (31) und Schwenken des Griffs (31) verhindert.

7. Kinderfahrzeugsitz (1) gemäß einem der vorhergehenden Ansprüche 3-6, **dadurch gekennzeichnet, dass** die Mittel zum Verhindern des Schwenkens des Griffes (31) in der Freigabestellung gehalten wird durch den Deaktivierungsmechanismus von dem Einsatz (4).

8. Kinderfahrzeugsitz (1) gemäß Anspruch 4, 5 oder 6, **dadurch gekennzeichnet, dass** der Deaktivierungsmechanismus einen Streifen (20) umfasst, welcher angrenzt an den Betätigungsarm (41), wodurch der Betätigungsarm (41) gehalten wird in der Freigabestellung.

9. Kinderfahrzeugsitz (1) gemäß einem der vorhergehenden Ansprüche, **dadurch gekennzeichnet, dass** der Neigungsmechanismus gegen eine Federkraft in die Freigabestellung bewegbar ist.

10. Kinderfahrzeugsitz (1) gemäß einem der vorhergehenden Ansprüche, **dadurch gekennzeichnet, dass** der Gurt (12) mindestens einen Schrittgurt (15) umfasst, während der Sitz einen Raum zur Lagerung des Schrittgurtes (15) umfasst.

11. Einsatz (4) für einen Kinderfahrzeugsitz (1) gemäß einem der vorhergehenden Ansprüche, wobei der Einsatz (4) versehen ist mit einer Deaktivierungsvorrichtung zum Deaktivieren der Neigungsarretiervorrichtung des Kinderfahrzeugsitzes (1).

## Revendications

1. Siège enfant pour véhicule (1) comprenant au moins une base (2), un siège (3), un mécanisme d'inclinaison pour faire passer le siège (3) par rapport à la base (2) d'au moins une première position à une seconde position et vice versa, et un mécanisme de blocage d'inclinaison pour empêcher au moins un déplacement du siège (3) de la seconde position à la première position lorsqu'un poids supérieur à un poids prédéterminé est exercé sur le siège (3), **caractérisé en ce que** le siège enfant pour véhicule (1) comprend également un harnais (12) pour retenir un enfant (50) dans le siège (3) et un mécanisme de désactivation pour désactiver le mécanisme de blocage d'inclinaison, lequel mécanisme de désactivation peut être utilisé lorsque le harnais est utilisé.

2. Siège enfant pour véhicule (1) selon la revendication 1, **caractérisé en ce que** le siège enfant pour véhicule (1) comprend un insert (4) amovible pour réduire la taille du siège (3), lequel insert (4) comprend le mécanisme de désactivation pour désactiver le mécanisme de blocage d'inclinaison.

3. Siège enfant pour véhicule (1) selon la revendication 1 ou 2, **caractérisé en ce que** le mécanisme d'inclinaison comprend une poignée (31) pouvant pivoter par rapport au siège (3) de positions de verrouillage sur la base (2) définissant les au moins première et seconde positions du siège (3), à une position déverrouillée dans laquelle le siège (3) est mobile par rapport à la base (2) d'au moins la première position à la seconde position et vice versa, tandis que le mécanisme de blocage d'inclinaison comprend un moyen pour bloquer le pivotement de la poignée (31), lequel moyen est mobile d'une position débloquée dans laquelle la poignée (31) peut pivoter par rapport au siège (3) à une position bloquée dans laquelle le pivotement de la poignée (31) est empêché.

4. Siège enfant pour véhicule (1) selon la revendication 3, **caractérisé en ce que** le moyen pour bloquer le pivotement de la poignée (31) comprend un bras de commande (41) pouvant pivoter contre une force de ressort de la position débloquée à la position bloquée, dans lequel le bras de commande (41) coopère avec la poignée (31) et empêche le pivotement de la poignée (31).

5. Siège enfant pour véhicule (1) selon la revendication 4, **caractérisé en ce que** le moyen pour bloquer le pivotement de la poignée (31) comprend une extension (36) prévue sur la poignée (31), laquelle extension (36) est située dans un passage dans le bras de commande (41) dans sa position bloquée.

6. Siège enfant pour véhicule (1) selon la revendication 4 ou 5, **caractérisé en ce que** le mécanisme de blocage d'inclinaison comprend une plaque pivotante (18) prévue dans une partie de siège (6) du siège (3), laquelle plaque coopère avec le bras de commande (41), dans lequel la plaque est dans une position au repos lorsque le bras de commande (41) est dans la position débloquée, tandis que la plaque peut pivoter sous un poids supérieur au poids prédéterminé sur le siège (3) si aucun mécanisme de désactivation n'est présent dans le siège (3) pour faire pivoter le bras de commande (41) vers la position bloquée, dans lequel le bras de commande (41) coopère avec la poignée (31) et bloque le pivotement de la poignée (31).

7. Siège enfant pour véhicule (1) selon l'une quelconque des revendications précédentes 3 à 6, **caractérisé en ce que** le moyen pour bloquer le pivotement de la poignée (31) est maintenu dans la position débloquée par le mécanisme de désactivation de l'insert (4).

8. Siège enfant pour véhicule (1) selon la revendication 4, 5 ou 6, **caractérisé en ce que** le mécanisme de désactivation comprend une bande (20) venant en butée avec le bras de commande (41), le bras de commande (41) se trouvant ainsi maintenu dans la position débloquée.

9. Siège enfant pour véhicule (1) selon l'une quelconque des revendications précédentes, **caractérisé en ce que** le mécanisme d'inclinaison est mobile vers la position déverrouillée contre une force de ressort.

10. Siège enfant pour véhicule (1) selon l'une quelconque des revendications précédentes, **caractérisé en ce que** le harnais (12) comprend au moins une ceinture d'entrejambe (15), tandis que le siège (3) comprend un compartiment pour ranger la ceinture d'entrejambe (15).

11. Insert (4) pour un siège enfant pour véhicule (1) selon l'une quelconque des revendications précédentes, lequel insert (4) est muni d'un mécanisme de désactivation pour désactiver le mécanisme de blocage d'inclinaison du siège de véhicule pour enfant (1).
